# EUROPEAN PATENT APPLICATION

(11) **EP 1 116 438 A1**
(43) Date of publication of application: **18.07.2001**
(21) Application number: 01100583.2
(22) Date of filing: 10.01.2001
(51) Int. Cl.: A01K 85/16

(54) **Lure**

(30) Priority: 11.01.2000 JP 2000000053
(71) Applicant: Imamura, Koichi, Oota-ku, Tokyo (JP)
(72) Inventor: Imamura, Koichi, Oota-ku, Tokyo (JP)
(74) Representative: Pellmann, Hans-Bernd, Dipl.-Ing.

(57) **Abstract**

To provide a lure in which an elemental line passing through an interior of a lure body is positively drawn backwardly of the lure body upon the fishing-on, so that fish that has been hooked on a fishing hook and the lure body may be kept at a predetermined distance also by the dragging action of the fishing line, and fish will not readily be released from the fishing line even if the fish on the hook struggles. A through-hole is formed from a tip end portion of the lure body 1 to a portion where the fishing hook 9 is mounted in the interior portion of the lure body. The elemental line 4 having a length longer than said through-hole is caused to pass through the through-hole. A front end of the elemental line that has been drawn out of the opening end 2a of the through hole on the front end side of the lure body is fixed swingably along the fishing line L fixed to the tip end portion of the lure body. The fishing hook is mounted at the rear end of the elemental line that has been drawn out of the other opening end of the through-hole. The front end of the elemental line is a free end not fixed to the fishing line, and a retainer member retained at the opening end of the through-hole on the tip end portion side of the lure body when the rear end of the elemental line is drawn may be provided at the free end.

## Description

### BACKGROUND OF THE INVENTION

### 1. Field of the Invention

The present invention relates to an improvement in a fishing lure.

### 2. Description of the Related Art

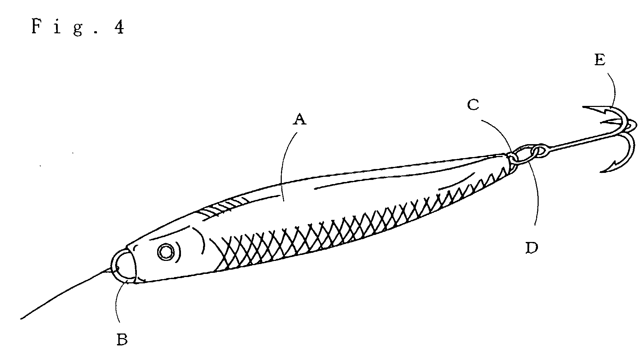

Fig. 4 shows a conventional general lure. A fish-shaped lure body A has at a mouth portion a top ring B to be connected to the fishing line, and hook C at a rear end portion or both at the rear end portion and a belly portion, respectively. A fishing hook E is mounted through a split ring D onto this hook C. In such a general lure, the fishing hook E is fixed in the vicinity of the lure body A, and in addition, the degree of freedom of movement of a proximal end of the fishing hook E is defined along the split ring D. Therefore, when the fish that bites the fishing hook E struggles, the fish body collides against the lure body A so that branch hooks might be released from the mouth of the fish.

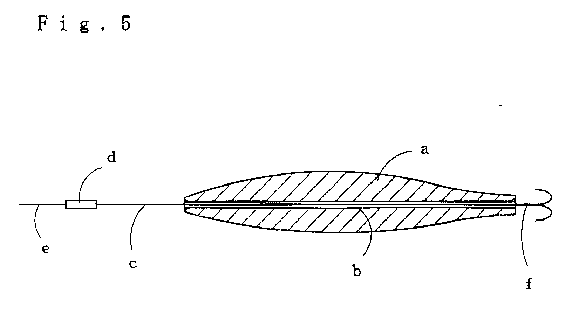

In order to solve this, the applicant has proposed the invention described in Japanese Utility Model Application Laid-Open No. Hei 6-19458. According to this invention, a through-hole b is formed from a tip end portion to a rear end portion in the interior of the lure body a as shown in the cross-section view of Fig. 5. A wire c longer than the through-hole b is caused to pass through the through-hole b. A fishing line e is connected through a retainer member d to a tip end of the wire c. A fishing hook f is fixed to the rear end of the wire c.

When the fish bites the fishing hook f, the wire c is drawn backwardly so that a retainer member d is stopped while being retained at the tip end portion of the lure body. Since the wire c is drawn backwardly from the rear end of the lure body, even if the fish that has been hooked at the fishing hook, there is no fear that the fishing body would collide with the lure body a.

However, the lure proposed by the present applicant is arranged so that the fishing line e and the wire c are coupled with each other in one line. Accordingly, when the fish bites on the lure, unless the force when the fish tries to be released from the hook is larger than the drag force of the fishing line e, the wire c will not be drawn backwardly of the lure. Since the lure has the object of displaying action to appeal to the biting characteristics or curiosity of the fish, the continuous or discontinuous drag force is applied always to the line (the fishing line and the wire in this case). For this reason, when the fish is on, upon such as the operation an instantaneous drag, the amount of the pay-out backwardly to the lure would be insufficient.

Also, upon the fish-on, as the fishing line e is drawn, the wire c is also drawn together and the fishing hook f and the fish reach the tail portion of the lure body a to lead to the similar problem as the conventional general lure described above.

### SUMMARY OF THE INVENTION

Accordingly, an object of the present invention is to provide a lure in which an elemental line passing through an interior of a lure body is positively drawn backwardly of the lure body upon the fish-on, so that fish that has been hooked on a fishing hook and the lure body may be kept at a predetermined distance also by the dragging action of the fishing line, and fish will not readily be released from the fishing line even if the fish on the hook struggles.

The present invention is provided with the following structure in order to attain the above-described object.

Namely, in this lure, a through-hole is formed from a tip end portion of the lure body to a portion where the fishing hook is attached in the interior portion of the lure body. The elemental line having a length longer than said through-hole is caused to pass through the through-hole. A front end of the elemental line that has been drawn out of the opening end of the through-hole on the front end side of the lure body is fixed swingably along the fishing line L fixed to the tip end portion of the lure body. The fishing hook is mounted at the rear end of the elemental line that has been drawn out of the other opening end of the through-hole.

The front end of the elemental line may be a free end not fixed to the fishing line, and a retainer member retained at the opening end of the through-hole on the tip end portion side of the lure body when the rear end of the elemental line is drawn may be provided at the free end. If the retainer member is a member for preventing the front end of the elemental line from inserting into the through-hole from the front opening end of the through-hole such as a retainer piece in which a metal made thin plate member is press-fitted to the front end of the elemental line or a ring member or any other member, it may have any structure.

Thus, the fishing line for operating the lure body and the elemental line for moving the fishing hook are separate from each other so that the elemental line may be drawn out irrespective of the action operation such as line drawing. It is preferable to use a wire as the member constituting the elemental line, but it is possible to use any other member such as a general fishing line.

It is possible to use, as the coupling and fastening means for the front end of the elemental line and the fishing line to each other, for example, a simple means for binding the front end of the elemental line into a ring-shape for causing the fishing line to pass through the ring, or any other suitable means.

The through-hole is formed to pass through the interior of the lure body from a head portion of the lure body having fishing hooks at a tail portion and a belly portion to the tail portion. The through-hole may be formed from the head portion of the lure body to the fishing hook of the belly portion.

It is preferable that an insert piece be inserted into the other opening end of the through-hole for tentatively fixing the fishing hook when the front end of the elemental line is drawn to the front side of the lure is mounted on the rear end of the elemental line, and said fishing hook is mounted at the rear end of said insert piece. In this case, the fishing hook is mounted at the rear end of the insert piece.

### BRIEF DESCRIPTION OF THE DRAWINGS

In the accompanying drawings:
Fig. 1 is a perspective view of an outer appearance of a lure according to one embodiment of the invention;
Fig. 2 is a cross-sectional view of the lure;
Fig. 3 is a perspective view of an outer appearance of a lure according to another embodiment of the invention;
Fig. 4 is a perspective view of an outer appearance of a conventional general lure; and
Fig. 5 is a perspective view of an outer appearance of the prior art to which the present applicant's proposal pertains.

### DETAILED DESCRIPTION OF THE PREFERRED EMBODIMENTS

An embodiment of the invention shown in the drawings will now be described.

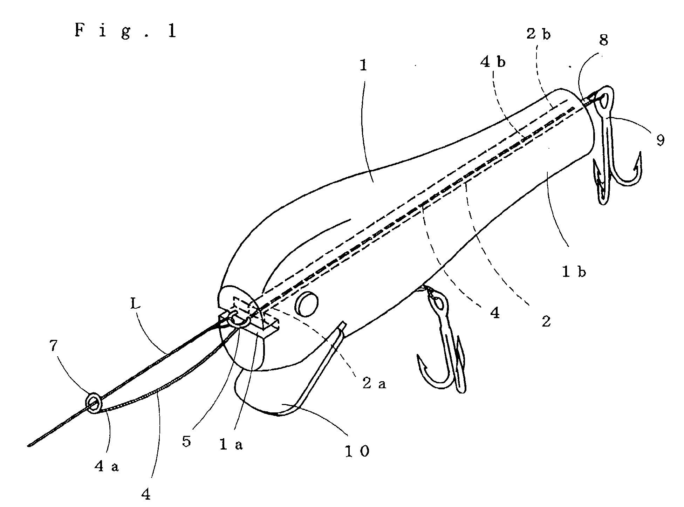

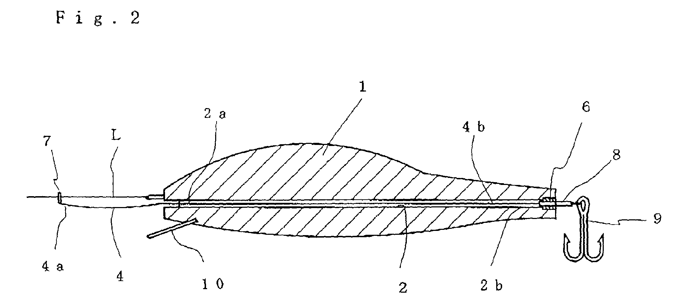

Figs. 1 and 2 are an outer perspective view and a cross-sectional view showing a lure according to one embodiment of the invention.

In the two drawings, reference numeral 1 therein denotes a lure body formed in a fish-shape with a suitable material such as wood. A through-hole 2 is formed from a mouth portion la at a tip end and a tail portion 1b at a rear end in the interior portion of the lure body 1. The through-hole 2 is formed to have a diameter such that an elemental line 4 to be inserted is loosely pass through the through-hole. A rear opening end 2b of the through-hole 2 has a somewhat larger diameter. A sleeve 6 is fitted in this portion. Also, a top ring 5 to which the fishing line is to be bound is mounted on the mouth portion la of the lure body.

Numeral 4 denotes the elemental line that is made of a single thin wire. The elemental line 4 is caused to be inserted into the above-described through-hole and has a length longer than a length from the front opening end 2a to the rear opening end 2b of the through-hole 2. When the fish is on and the elemental line 4 is drawn out of the through-hole backwardly, if the pay-off amount is too large, the elemental line would be entangled with the lure body. Accordingly, the overall length of the elemental line is suitable set in view of a size of the lure body, the kind of fish, or the like.

A coupling ring 7 is provided at the front end 4a of the elemental line 4 and is provided around the fishing line bound to the top ring 5. The coupling ring 7 may be formed by binding the end portion of the elemental line into a ring-shape or may be formed by a separate member from the elemental line in the same manner as a retainer piece to be described later. An insert piece 8 to be inserted loosely into the above-described sleeve is fixed to the rear end 4b of the elemental line 4 and a proximal end of a fishing hook 9 is coupled with its tip end.

Incidentally, reference numeral 10 shown denotes a lip or a wing provided at a front portion of the lure body.

The use condition of this lure will now be described. First of all, the front end 4a of the elemental line 4 is drawn from the lure body, and the insert piece 8 at the rear end 4b of the elemental line 4 is inserted into the sleeve of the through-hole 2. If the fitting of the insert piece 8 into the sleeve 6 is too loose, the fishing hook is easily separated away from the lure body 1 due to the tide or the like, whereas if the fitting is too tight, upon the fish-on, the elemental line 4 can not be drawn out from the through-hole. In view of these factors, the fitting degree is set suitably. Of course, depending upon the material of the lure body 1 or the insert piece 8 or the like, it is possible to provide the elemental line without providing the sleeve 6 within the through-hole. Also, in the case where the effect of the tide or the like may be dispensed with, it is not always necessary to provide the insert piece at the rear end of the elemental line.

On the other hand, the fishing line L is inserted into the coupling ring 7 at the front end 4a of the elemental line 4 that has been drawn out of the front opening end 2a of the through-hole 2. The end portion of the inserted fishing line L is bound to the top ring 5.

When the lure is operated by means of the fishing line L in the water and the fish bites the fishing hook 9, the rear end of the elemental line is drawn in a direction in which it is paid off. At this time, since the coupling ring 7 at the front end 4a of the elemental line 4 is slidingly moved along the fishing line L, the elemental line 4 is drawn backwardly of the lure without being subjected to the adverse affect of the working force to the fishing line L concomitant with the lure action. The coupling 7 is retained at a position of the top ring 5. There is no fear that the fish hooked at the fishing hook 9 of the elemental line 4 paid off backwardly at a predetermined length would collide with the fish body against the lure body 1 even if the fish struggles strongly. Since, the fish is not released from the fishing hook 9, there is no fear that the hook 9 would be separated away from the lure body 1, thus there is no fear that the rear portion of the elemental line 4 would be entangled with the lure body 1.

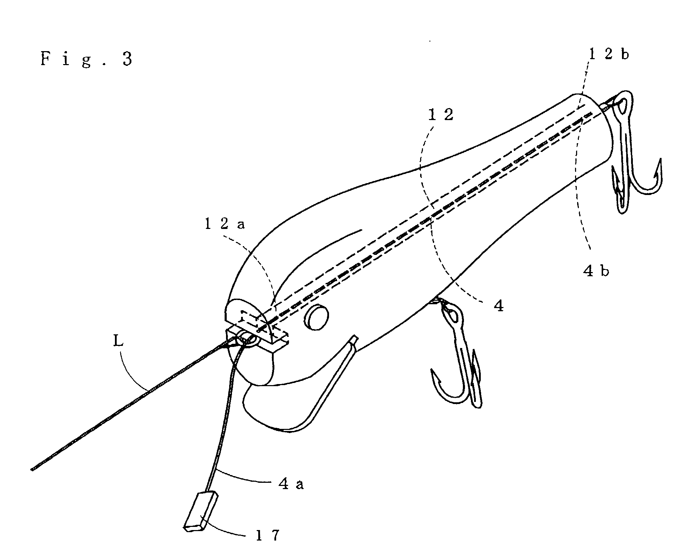

Fig. 3 is a perspective view of an outer appearance of a lure according to another embodiment of the invention.

A lateral groove 13 is formed at the front opening end 12a of the through-hole 12 in the lure body 11. The front end 14a of the elemental line 14 is a free end that is drawn out of the front opening end 12a of the through-hole 12 and is not bound to the fishing line L. A retainer piece 17 retained at the above-described lateral groove 14 of the front opening end 12a of the through-hole 12 is fixed to this front end 14a. The retainer piece 17 is formed by press-fitting a metal made thin plate material to the front end of the elemental line. The other structure is the same as in the case of the embodiment shown in Figs. 1 and 2 (in which the same reference numerals are used to like members or components and the explanation therefor will be omitted).

The effect of the lure is the same as that of the foregoing embodiment. However, it is necessary to set up the length of the elemental line 14 projecting from the front opening end 12a of the through-hole 12 to a minimum level to prevent entanglement or the like.

Incidentally, the elemental line is formed of a thin wire in the foregoing embodiment but the material is not limited thereto. It is possible to use, for example, a fishing line without any modification. Also, although not shown, it is possible to apply the invention to the case where the through-hole is formed toward the fishing hook provided to the belly portion of the lure body. Two elemental lines are used in the case where the through-hole is formed to the fishing hooks at the belly portion and the tail portion. The two elemental lines are moved independently of each other through the through-hole.

It is possible to provide the following advantages according to the present invention. Namely, when the fishing hook is drawn in this lure, the elemental line fixed to the fishing hook is drawn from the rear opening end of the through-hole of the lure body so that the fishing hook is struggled to a position away from the lure body. Accordingly, it is possible to prevent the hooked fish from colliding against the lure body and separating away from the fishing hook. Then, at this time, since the elemental line is a separate system from the fishing line that serves to play a variety of actions for the lure body, it is possible to pay off the elemental line and the fishing hook backwardly of the lure body without fail and without any adverse affect to the working force to the fishing line.

Also, the elemental line moving within the through-hole is retained at the top ring with its front end being slidingly moved along the fishing line or retained at the opening end at the front end of the through-hole by the retainer member. Accordingly, the elemental line would not be paid off backwardly of the lure body in vain. There is no disadvantage that the elemental line would be entangled with the lure body.

Furthermore, in the case where the insert piece is fastened to the rear end of the elemental line, the fishing hook may be held without fail to a position in the vicinity of the lure body.

To provide a lure in which an elemental line passing through an interior of a lure body is positively drawn backwardly of the lure body upon the fishing-on, so that fish that has been hooked on a fishing hook and the lure body may be kept at a predetermined distance also by the dragging action of the fishing line, and fish will not readily be released from the fishing line even if the fish on the hook struggles. A through-hole is formed from a tip end portion of the lure body 1 to a portion where the fishing hook 9 is mounted in the interior portion of the lure body. The elemental line 4 having a length longer than said through-hole is caused to pass through the through-hole. A front end of the elemental line that has been drawn out of the opening end 2a of the through hole on the front end side of the lure body is fixed swingably along the fishing line L fixed to the tip end portion of the lure body. The fishing hook is mounted at the rear end of the elemental line that has been drawn out of the other opening end of the through-hole. The front end of the elemental line is a free end not fixed to the fishing line, and a retainer member retained at the opening end of the through-hole on the tip end portion side of the lure body when the rear end of the elemental line is drawn may be provided at the free end.

## Claims

1. A lure, characterized in that:
a through-hole is formed in an interior of a lure body from a tip end portion of the lure body to a portion where a fishing hook is mounted;
an elemental line longer than said through-hole is caused to pass through this through-hole;
a front end of said elemental line that has been drawn out of an opening end of the through-hole on the tip end side of the lure body is fixed swingably along the fishing line fixed to the tip end portion of the lure body; and
a fishing hook is mounted at a rear end of the elemental line that has been drawn out of the other opening end of the through-hole.

2. A lure, characterized in that:
a through-hole is formed in an interior of a lure body from a tip end portion of the lure body to a portion where a fishing hook is mounted;
an elemental line longer than said through-hole is caused to pass through this through-hole;
the fishing line is fixed to the tip end portion of the lure body, whereas a front end of the elemental line that has been drawn out of an opening end of the through-hole on the tip end side of the lure is a free end, and a retainer member retained at the opening end of the through hole on the tip end portion side of the lure body when the rear end of the elemental line is drawn is provided at this free end; and
a fishing hook is mounted at a rear end of the elemental line that has been drawn out of the other opening end of the through-hole.

3. A lure according to claim 1 or 2, wherein said through-hole is formed to pass Sough the interior of the lure body from a head portion of the lure body having fishing hooks at a tail portion and a belly portion to the tail portion.

4. A lure according to claim 1 or 2, wherein an insert piece to be inserted into the other opening end of the through-hole for tentatively fixing the fishing hook when the front end of the elemental line is drawn to the front side of the lure is mounted on the rear end of the elemental line, and said fishing hook is mounted at the rear end of said insert piece.
